Europäisches Patentamt

European Patent Office

Office européen des brevets

(19)

(11) Numéro de publication: **0 028 550**
**B1**

## (12) FASCICULE DE BREVET EUROPEEN

(45) Date de publication du fascicule du brevet:
04.04.84

(51) Int. Cl.³: **H 02 M 7/515**

(21) Numéro de dépôt: **80401419.9**

(22) Date de dépôt: **06.10.80**

(54) Onduleur et générateur statique de signaux comportant un tel onduleur.

(30) Priorité: **17.10.79 FR 7925785**

(43) Date de publication de la demande:
**13.05.81 Bulletin 81/19**

(45) Mention de la délivrance du brevet:
**04.04.84 Bulletin 84/14**

(84) Etats contractants désignés:
**CH DE GB LI**

(56) Documents cités:
**GB - A - 1 113 013**
**US - A - 3 866 098**

**IEEE CONFERENCE PAPER, no. 71CP722-IGA présenté à IEEE/ASME MATERIAL HANDLING CONFERENCE, 27-29 octobre 1971 Milwaukee, Wisconsin US J.C. VAN DER MEER: "Component selection for solid-state crane drives" pages 1-5**

(73) Titulaire: **ENERTEC SOCIETE ANONYME, 12, Place des Etats-Unis, F-92120 Montrouge (FR)**

(72) Inventeur: **Carnel, Alain, 49, Chemin de la Botte Molle, F-86000 Poitiers (FR)**

(74) Mandataire: **Bentz, Jean-Paul, GIERS SCHLUMBERGER Service BREVETS 12, place des Etats-Unis, F-92124 Montrouge Cedex (FR)**

## Onduleur et générateur statique de signaux comportant un tel onduleur

La présente invention est relative aux onduleurs, en particulier aux onduleurs utilisés dans les générateurs statiques, en vue d'injecter sur une ligne d'énergie électrique des signaux de courant fort vers des stations d'utilisation reliées à la ligne, du type mentionné dans le préambule de la revendication 1.

On sait que les onduleurs de courant électrique sont des dispositifs permettant de créer à partir de signaux de commande de puissance relativement faible, émis dans des conditions de modulation déterminée, des signaux de courant fort correspondants, notamment susceptibles de parcourir de grandes distances sur des lignes d'énergie électrique.

Un exemple d'application de ces onduleurs se trouve dans les générateurs statiques de télécommande contralisée dans lesquels des trains d'ondes d'une fréquence acoustique de 175 HZ, par exemple, sont envoyés sur le réseau d'énergie électrique pour commander certaines opérations dans des stations de réception chez les abonnés, telles que l'enclenchement et le déclenchement de chauffe-eaux, les changements de tarifs de compteurs, etc. Les trains d'ondes à 175 HZ sont modulés en amplitude, et en durée et position dans le temps, de telle sorte que les récepteurs puissent, après détection d'un premier train appelé impulsion de démarrage, reconnaître dans le ou les trains d'ondes ou impulsions suivantes un message codé contenant souvent un adressage ou une présélection.

Un type d'onduleur connu comporte une alimentation en tension continue de puissance et deux redresseurs commandés tels que des thyristors commutés alternativement de façon à faire passer un courant continu à partir de cette alimentation alternativement dans un sens et dans l'autre dans le primaire d'un transformateur de sortie dont le secondaire recueille ainsi une tension périodique.

Ces systèmes simples se prêtent de façon malaisée à la régulation de la tension de sortie en fonction de la charge sur laquelle l'onduleur débite.

On connait également des onduleurs dans lesquels le passage du courant vers le circuit de sortie dans chaque sens est contrôlé non par un mais par deux thyristors placés en série. Dans ce type de système, quatre thyristors par phase sont branchés en pont et il est possible, en agissant sur les commandes individuelles de chaque thyristor de faire prendre trois états, positif, négatif et nul, à la tension de sortie du pont, ce qui permet de moduler la largeur des créneaux positifs et négatifs de cette tension et donc sa valeur moyenne sans modifier ni la symétrie de ces créneaux, ni leur fréquence, ni leur phase par rapport à une tension de référence de phase, ou signal pilote.

Il subsiste cependant, avec ces systèmes, un problème général lié à l'utilisation de redresseurs commandés et notamment des thyristors. En effet, une fois allumé, c'est à dire porté à un état conducteur, un redresseur commandé est difficile à éteindre. La disparition du signal de commande ayant provoqué son allumage n'est pas suffisante et une forte polarisation en sens inverse est nécessaire pour effectuer son extinction rapide.

Divers systèmes ont été proposés pour effectuer cette extinction, ou soufflage, du redresseur commandé par polarisation inverse. En particulier, on a proposé des systèmes à pont de thyristors dans lesquels les deux thyristors adjacents commandés en opposition dans chaque demi-pont sont liés par une self inductance à deux enroulements de telle sorte que l'allumage de l'un provoque l'extinction de l'autre par effet de mutuelle. Ces dispositifs présentent toutefois un problème d'élimination de l'énergie accumulée dans la self inductance durant la phase d'extinction, énergie qui doit être éliminée aussi rapidement que possible pour permettre l'extinction suivante dans les cas de séquences de commutation rapides.

Des circuits d'élimination de cette énergie ont été proposés dans lesquels un auto transformateur couplé à des circuits à diodes permet de renvoyer vers l'alimentation à courant continu l'énergie piégée dans la self inductance selon un principe dit de récupération. Cette opération se fait rapidement et sans perturber le fonctionnement du thyristor devenu conducteur. Elle présente cependant l'inconvénient de mettre en œuvre des composants (auto transformateurs) chers et volumineux compte tenu de l'importance des courants à véhiculer pour éliminer l'énergie en cause. D'autres systèmes font appel à des thyristors supplémentaires pour commander la phase de soufflage proprement dit, ce qui est également un facteur de coût additionnel.

La présente invention vise à pallier certains inconvénients signalés précédemment, notamment à proposer un onduleur permettant de produire des signaux de puissance à des fréquences élevées grâce à des séquences de commutation rapides de courants forts avec un ensemble de composants d'un prix raisonnable.

A cet effet, l'invention, ayant pour objet un onduleur pour la production d'un signal de sortie périodique sous la commande d'un signal pilote en vue de l'injection du signal de sortie sur une ligne d'énergie électrique polyphasée à N phases, comprenant:

— une alimentation électrique délivrant un courant continu entre une première et une seconde borne d'alimentation,
— un circuit d'ondulation comportant 2 N demi-ponts montés en parallèle entre les première et seconde bornes d'alimentation, chaque demi-pont comportant deux branches montées en série entre ces bornes d'alimentation, chaque branche comprenant un composant à conduction commandée, tel qu'un thyristor, polarisé de la première vers la seconde borne d'alimentation et une moitié d'inductance insérée entre les deux thyristors d'un demi-pont et pourvue d'une borne en son point milieu; au moins un élément capacitif étant monté en parallèle sur chaque branche et une résistance de dissipation d'énergie étant montée en série, entre ledit point milieu et l'une desdites bornes d'alimentation, avec un composant à conduction polarisée tel qu'une diode, polarisé de la seconde vers la première borne, et

— N circuits de sortie pour injecter ledit signal de sortie, chaque circuit de sortie étant connecté entre les points milieux de deux inductances appartenant respectivement à un premier et à un second demi-pont, les thyristors appartenant au même demi-pont étant commandés en opposition de phase, est essentiellement caractérisé en ce que l'un au moins desdits éléments résistifs de dissipation d'énergie est commun à au moins deux branches raccordées à une même borne d'alimentation mais appartenant à des demi-ponts raccordés à des circuits de sortie différents.

Grâce à ce système on parvient à éliminer très rapidement l'énergie piégée par le seul jeu des thyristors existants dans l'onduleur et sans nécessiter ni l'intervention d'autres composants de coût élevé ni un surdimensionnement prohibitif des composants utiles.

D'autres aspects et avantages de l'invention apparaîtront à la lecture de la description suivante d'un mode de réalisation de l'invention faite en référence aux dessins annexés sur lesquels:

— la figure 1 est un schéma du circuit électrique d'un onduleur conforme à l'invention;
— la figure 2 est une vue agrandie d'une portion de la figure 1;
— la figure 3, formée des figures 3A, 3B, 3C, et 3D, illustre les différents cas de conduction des thyristors d'un pont du circuit de la figure 2;
— la figure 4 illustre la formation du signal de sortie correspondant à une séquence des cas de la figure 3;
— la figure 5 est un diagramme schématique des signaux de commande des thyristors et des tension et courant de sortie en résultant;
— la figure 6 est un diagramme de tensions et de courants illustrant les explications du fonctionnement de l'onduleur conforme à l'invention.

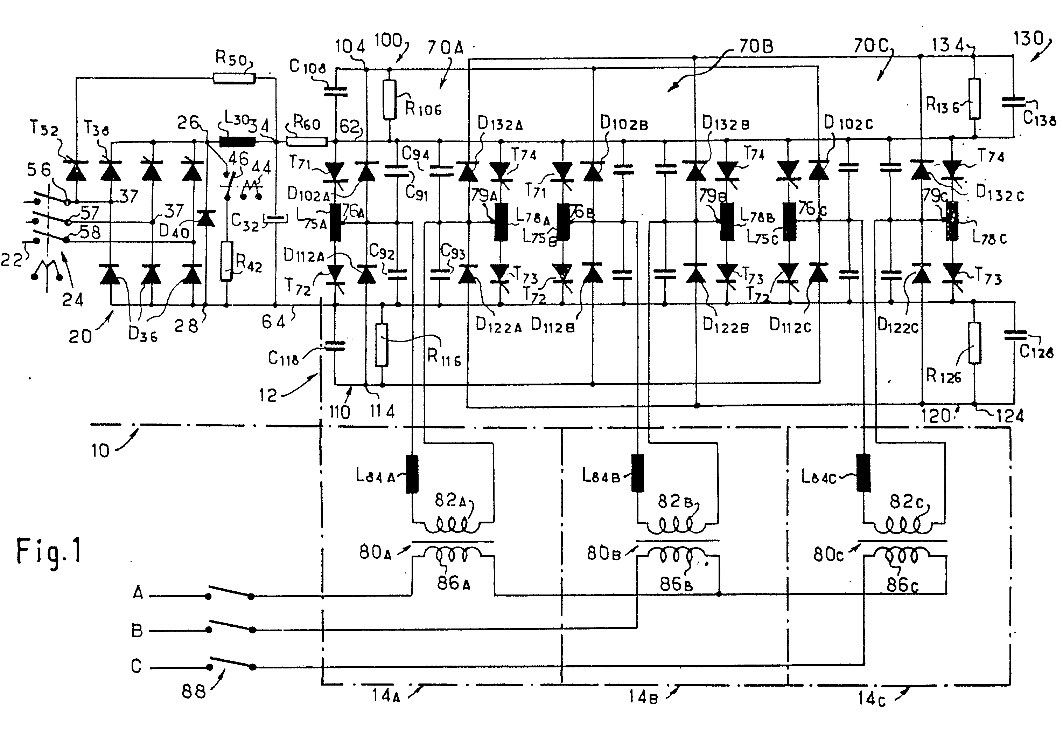

Si l'on se réfère à la figure 1, on distingue un schéma d'onduleur comportant trois parties principales:

— une alimentation en tension continue 10 fournissant par exemple une tension de 500 volts continus à partir d'un réseau triphasé de 380 volts;
— un circuit d'ondulation 12 comportant trois ponts de thyristors, chacun correspondant à une phase d'un réseau triphasé;
— trois circuits de sortie 14A, 14B et 14C pour les trois phases respectives d'un réseau de sortie.

L'alimentation 10 comporte un pont redresseur triphasé 20 connecté directement aux bornes d'un réseau triphasé d'entrée 380 volts 22, par l'intermédiaire d'un contacteur 24. Aux bornes de sortie 26 et 28 du redresseur 20 est connecté un filtre comprenant une self L30 et un condensateur électrolytique C32 branchés en série entre ces bornes 26 et 28. La sortie du filtre (L30, C32) s'effectue entre la borne 28 et une borne 34 à la jonction de la self L30 et du condensateur C32. Par convention, on se référera à la borne 28 comme la borne négative et à la borne 34 comme la borne positive de l'alimentation continue fournie à la sortie de ce filtre.

Le redresseur triphasé 20 est composé de trois branches montées en parallèle entre les bornes 26 et 28. Chacune de ces branches comporte une diode D36 et un thyristor T38, conducteur dans le sens des bornes 28 à 26 et réuni par un point de jonction 37 connecté à une borne respective 56, 57 ou 58 du contacteur 24. En outre, une diode D40 relie les bornes 28 à 26 dans ce sens de conduction.

Une résistance R42 est prévue en parallèle à la diode D40 pour shunter cette dernière et le filtre lorsqu'un relais 44 est desexcité pour fermer un contact 46 ce qui décharge le condensateur C32.

Une résistance de pré-charge R50 est par ailleurs montée entre la borne 34 et la cathode d'un thyristor T52 dont l'anode est raccordée à la borne 56 du contacteur 24. Cette résistance permet, lorsque la grille de commande du thyristor T52 est excitée préalablement à la mise sous tension du redresseur 20 par le contacteur 24, de pré-charger le condensateur C32 sous une tension amortie par rapport à la tension qui serait fournie par la self L30 en l'absence d'un tel circuit de pré-charge.

Une résistance d'entrée R60 est branchée entre la borne 34 et une ligne 62 à sa sortie, la ligne 62 et la ligne 64 reliée à la borne 28 constituant les entrées proprement dites du circuit d'ondulation 12.

Le circuit d'ondulation 12 est constitué de trois ponts de thyristors identiques 70A, 70B, 70C respectivement associés aux circuits de sortie 14A, 14B, 14C. Chacun de ces circuits de sortie est destiné à l'injection sur une phase respective du réseau des signaux produits par l'onduleur.

Le circuit de sortie 14A comporte un transformateur 80A dont le primaire 82A est connecté en série avec une self inductance L84A de lissage de la tension appliquée au transformateur. Les circuits de sortie 14B et 14C sont constitués de la même manière par des transformateurs et selfs de mêmes numéros mais d'indices A, B ou C correspondants à la phase à laquelle ils sont associés.

Les secondaires 86A, 86B et 86C des transformateurs de sortie 80A, B, C sont couplés en étoile et reliés par un contacteur 88 aux lignes de phases A, B et C d'un circuit d'injection sur le réseau, non représenté. Cette injection sur le réseau de transport d'énergie électrique proprement dit est réalisée pour mémoire, par un transformateur d'injection à travers un shunt résonnant empêchant la remontée de la fréquence normale du réseau (50 HZ) vers les circuits de sortie 14A, B et C.

Revenant au circuit d'ondulation 12, on décrira maintenant en détail le pont de thyristors 70A associé au circuit de sortie 14A, les ponts 70B, 70C étant identiques et leurs éléments homologues étant repérés par les mêmes chiffres de référence associés, pour certains d'entre eux, à des indices littéraux correspondants au pont dont ils font partie.

Le pont de thyristors 70A comporte deux demi-ponts en parallèle entre les entrées 62 et 64. Le premier demi-pont est constitué par deux thyristors en série T71 et T72 de même sens, l'anode de T71 étant couplée à l'entrée positive 62 tandis que la cathode du thyristor T72 est couplée à l'entrée négative 64. La cathode de T71 est raccordée à l'anode T72 par l'intermédiaire d'une inductance (ou self) L75A à point milieu 76A.

Le deuxieme demi-pont du pont 70A se compose de deux thyristors en série et de même sens T74 et T73 orientés pour conduire entre les entrées 62 et 64 et reliés par une inductance (ou self) L78A à point milieu 79A, la cathode de T74 étant connectée à l'anode de T73 à travers l'inductance L78A.

Les thyristors T71, T72, T73 et T74 forment un pont entre les entrées 62 et 64 et les bornes de sortie dans sa diagonale représentées par les points milieu 76A et 79A des selfs L75A et L78A entre lesquels sont connectés la self L84A et l'enroulement 82A du circuit de sortie 14A.

Entre l'entrée 62 et le point milieu 76A est connecté un condensateur C91 et entre le point milieu 76A et l'entrée négative 64 est connecté un condensateur C92. De même, des condensateurs C94 et C93 sont respectivement connectés entre l'entrée positive 62 et le point milieu 79A, d'une part, et le point milieu 79A et l'entrée négative 64, d'autre part.

Entre l'entrée 62 positive et le point milieu 76A est également branché un circuit résistif 100 en vue de la dissipation de l'énergie emmagasinée dans la self L75A lorsque le thyristor T71 devient conducteur comme il sera expliqué plus loin. Ce circuit comporte une diode D102A dont l'anode est raccordée au point milieu 76A et dont la cathode est connectée à un point de jonction 104. Entre cette jonction 104 et l'entrée 62 sont branchés en parallèle une résistance R106 et un condensateur C108.

De la même façon, un circuit de dissipation 110, associé au thyristor T72, comporte une diode D112A dont la cathode est reliée au point milieu 76A et l'anode à un point de jonction 114. Entre cette jonction 114 et l'entrée négative 64 sont connectés en parallèle une résistance R116 et un condensateur C118.

Deux circuits de dissipation 120 et 130 sont respectivement associés aux thyristors T73 et T74. Ils comportent des diodes respectives D122A et D132A ainsi que des résistances R126 et R136, des condensateurs C128 et C138 et des points de jonction 124 et 134. Ces éléments sont connectés, pour le circuit 120, de façon identique à celle des éléments du circuit 110 si l'on remplace le point milieu 76A par le point milieu 79A et, pour le circuit 130, de façon identique à celle des éléments du circuit 100 en faisant le même remplacement.

Les circuits 100, 110, 120 et 130 sont également associés respectivement aux thyristors des ponts 70B et 70C de même numéro de référence que les thyristors auxquels ils sont associés dans le pont 70A.

A cet effet, le point de jonction 104 du circuit de dissipation 100 est également raccordé au point milieu 76B de la self L75B du pont 70B par l'intermédiaire d'une diode D102B et au point milieu 76C de la self L75C du pont 70C par l'intermédiaire d'une diode D102C.

De même, le point de jonction 114 du circuit 110 est relié aux points milieu 76B et 76C des ponts 70B et 70C par des diodes D112B et D112C. En outre, les points de jonction 124 et 134 sont reliés aux points milieu 79B et 79C des selfs L78B et L78C, par des diodes respectives D122B et D122C, pour le circuit 120 et par des diodes respectives D132B et D132C, pour le circuit 130.

On constate donc que les portions de circuit RC en parallèle des circuits de dissipation 100, 110, 120 et 130 sont communes aux trois ponts de thyristors 70A, 70B, 70C.

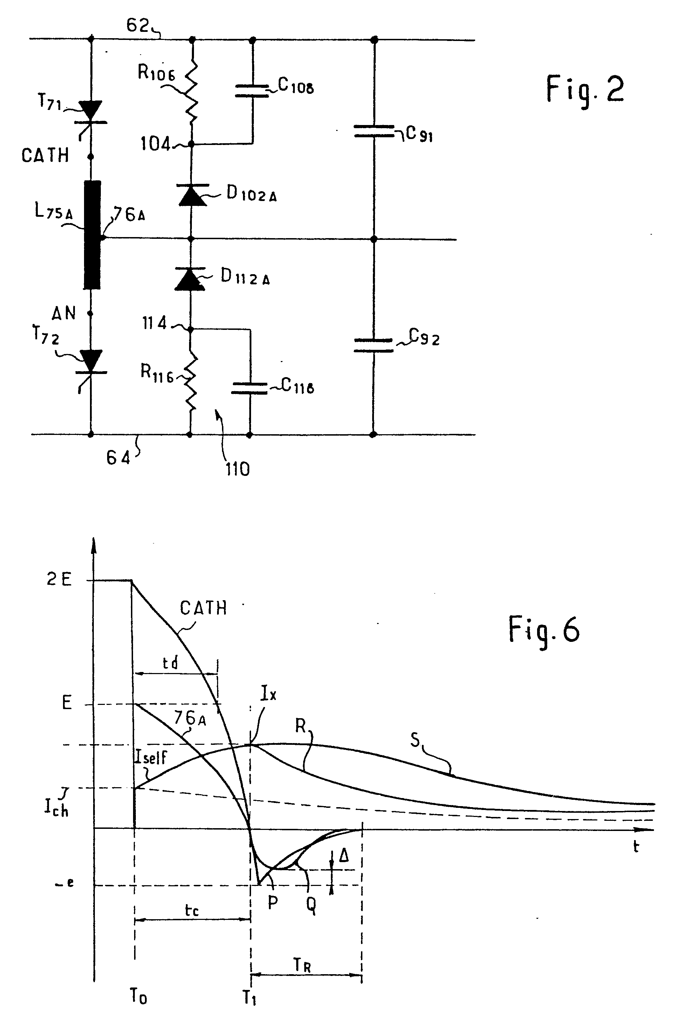

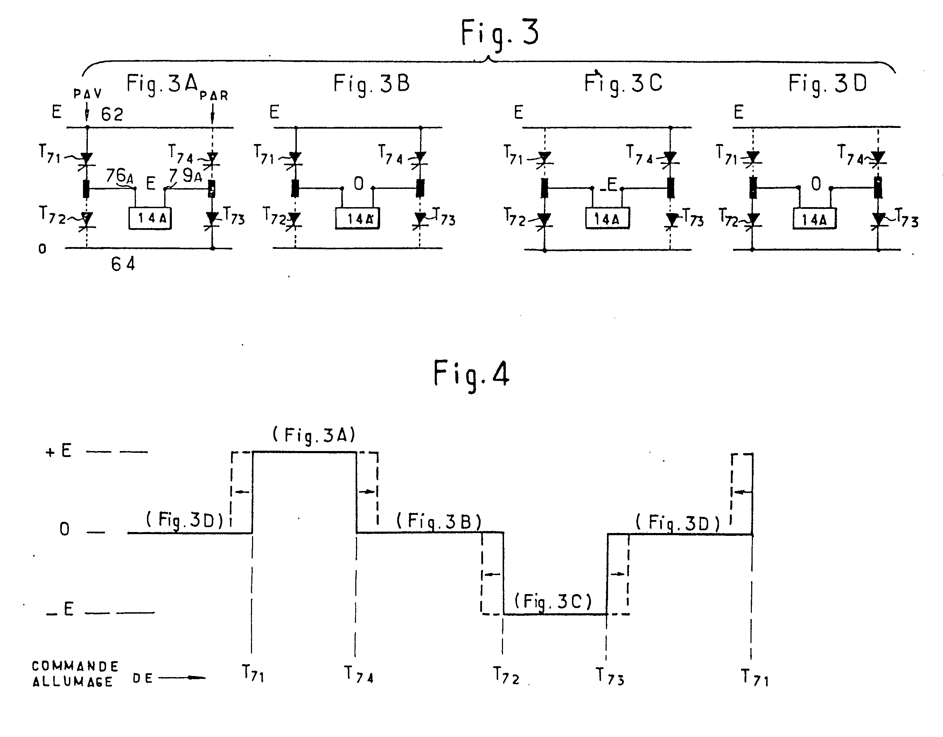

Le fonctionnement général du circuit est tout d'abord explicité en référence aux figures 3 et 4 afin de décrire les principes de formation des signaux de sortie. Puis le détail du fonctionnement des ponts des thyristors effectuant les commutations nécessaires est discuté plus en détail à propos des figures 2, 5 et 6.

Le système de commande, non représenté, des thyristors T71, T72, T73 et T74 de chaque pont est tel qu'en fonctionnement normal, les couples de thyristors en ligne tels que T71, T72, T73 et T74 de chaque demi-pont soient commandés en opposition. Cela signifie que, lorsqu'un signal de commande d'allumage est appliqué à la grille de commande de T71, aucun signal de commande d'allumage n'est appliqué sur la grille de commande T72 et vice versa.

Sur les figures 3A et 3D, les portions de circuit en conduction ont été représentées en trait plein tandis que les portions de circuit non conductrices sont représentées en pointillés.

On constate que selon les états conducteurs ou non, ou comme on l'exprime souvent, allumés ou éteints, des thyristors T71 à T74 du pont 70A quatre combinaisons sont possibles (on a désigné par E la tension d'alimentation entre 62 et 64). Dans la première, schématisée par la figure 3A, T71 et T73 sont conducteurs (thyristors des branches opposées du pont) et une force électromotrice (f.e.m) + E dans un sens apparaît entre les points milieu 76A et 79A, c'est à dire, aux bornes du circuit de sortie 14A.

La figure 3C représente la situation inverse dans laquelle les thyristors T71 et T73 sont éteints tandis que les thyristors T72 et T74 sont allumés, une (f.e.m) − E apparaissant aux bornes 76A et 79A de sens inverse à la précédente.

La figure 3B représente le cas où les thyristors T72 et T73 sont éteints et les thyristors T71 et T74 allumés, et la figure 3D représente la situation inverse. Dans les deux cas aucune tension n'apparaît entre les points milieu 76A et 79A; le circuit de sortie est soumis à une f.e.m nulle.

Sur la figure 4 on a représenté une forme d'onde de tension dans le temps susceptible d'être obtenue aux bornes 76A et 79A du circuit de sortie 14A par des commutations successives des thyristors T71 à T74, en indiquant en face de chaque portion plate de l'onde la configuration correspondante de la figure 3. Ainsi, par exemple, le sommet du créneau au niveau + E correspond à la disposition de la figure 3A. Partant de cette configuration, l'allumage du thyristor T74 provoque l'extinction du thyristor T73 et la retombée de la f.e.m de sortie au niveau 0 dans la situation représentée par la figure 3B (niveau de sortie nul).

A partir de cet état, l'entrée en conduction du thyristor T72, accompagnée de l'extinction de T71, va provoquer l'apparition d'une f.e.m de sortie − E (fig. 3C). Puis, la mise en conduction du thyristor T73 va ramener la f.e.m. de sortie au niveau 0 (fig. 3D). On constate, sur la figure 4, qu'en jouant sur l'écart entre les instants de la commande de mise en conduction des thyristors T71 à T74, on peut faire varier la largeur des créneaux de tension positifs et négatifs à la sortie du pont (créneaux en pointillés sur la figure 4). Cette observation est mise en œuvre par le circuit de commande de l'onduleur.

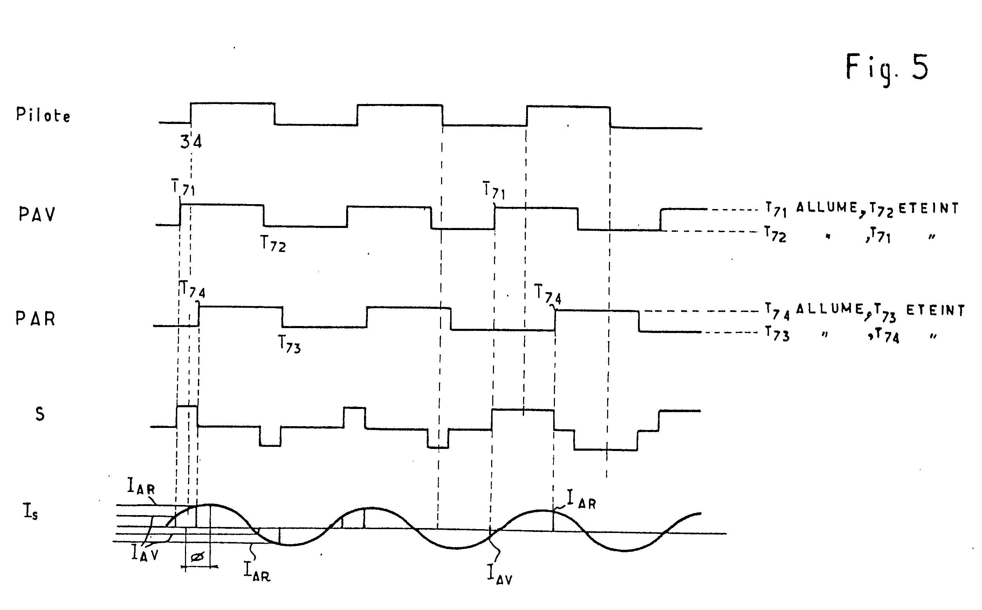

La figure 5 représente le diagramme des signaux d'état du potentiel de sortie du demi-pont PAV formé par les thyristors T71 et T72 et du demi-pont PAR, formé par les thyristors T73 et T74.

Sur cette figure, la transition de bas en haut des signaux PAV et PAR correspond à une commande des thyristors T71 et T74 respectivement. La transition de haut en bas correspond à une commande d'allumage des thyristors T73 et T72.

On constate que les commandes d'allumage des thyristors respectifs des demi-ponts, tout en possédant la même fréquence, sont décalées en phase. La f.e.m. de sortie aux bornes du circuit 14A résultant de la différence des potentiels de sortie de PAV et PAR est représentée en S sur la figure 5.

Sur cette figure on a également représenté le signal »pilote« qui fournit la fréquence de référence du signal de sortie S. On constate que la largeur des créneaux positifs et négatifs du signal S est déterminée par le déphasage des signaux PAV et PAR. Cette modulation de largeur intervient toutefois sans changement de fréquence et sans détruire la symétrie de largeur des impulsions positives et négatives de la tension de sortie par rapport au signal pilote.

On note également que le niveau de f.e.m. de sortie nulle est obtenu lorsque les thyristors du pont 70A sont commandés avec un déphasage nul entre les demi-ponts opposés et la f.e.m. de sortie peut être modulée en augmentant ce déphasage.

En ce qui concerne maintenant le fonctionnement de chaque pont proprement dit, en particulier le cycle d'extinction des thyristors d'une demi-branche de pont, on pourra se reporter à la figure 2 qui représente une vue agrandie des composants de la moitié gauche du pont 70A de la figure 1.

Tous les composants conservent le même numéro de référence, seule la disposition relative de certains de ces éléments ayant été légèrement modifiée pour faciliter la compréhension.

Si l'on examine la situation dans laquelle les thyristors T71 et T73 sont conducteurs on constate, comme on l'a déjà vu à propos de la figure 3A, qu'un courant circule entre les entrées positive 62 et négative 64 à travers le thyristor T71, le circuit de sortie 14A et le thyristor T73. On conserve la notation E pour la valeur du potentiel de la borne d'entrée 62 en supposant le potentiel de la borne d'entrée 64 nul.

Pour provoquer la commutation en conduction du thyristor T72, on applique un signal à la grille de commande de ce dernier tandis que la grille de commande du thyristor T71 en est dépourvue.

Lorsque le thyristor T72 s'allume, la liaison entre le point milieu 76A de la self L75A et la borne d'entrée 64 devient passante. Le courant à travers le thyristor T72 passe brusquement de la valeur 0 à la valeur $I_{ch}$ comme le représente le diagramme de la figure 6. Le potentiel d'anode de T72 qui se trouvait pratiquement au niveau E tombe brusquement à une valeur voisine de 0.

Le potentiel du point milieu 76A était lui aussi pratiquement égal à E avant l'allumage de T72. Une différence de potentiel E apparaît ainsi brusquement aux bornes de l'enroulement inférieur de la self L75A (raccordée à l'anode AN de T72) ce qui par la mutuelle entre les enroulements inférieur et supérieur de la self L75A se traduit par la création d'une différence de potentiel égale aux bornes de la moitié supérieure de cette self et l'apparition d'un potentiel 2E sur la cathode de T71 (CATH).

On constate que le thyristor T71 se trouve ainsi polarisé en inverse par effet de mutuelle avec une tension (− E) entre son anode (au potentiel E) et sa cathode (au potentiel 2E). Cette inversion de tension provoque la coupure (soufflage) du thyristor T71.

L'évolution des tensions de la cathode de T71 d'une part et du point milieu 76A de la self d'autre part à partir de l'instant d'allumage To est représentée sur le diagramme de la figure 6. La tension au point 76A décroit à partir de la valeur E (courbe PM 76A). La tension à la cathode de T71 (extrémité supérieure de la self L75A) décroit simultanément à partir de la valeur 2E. Pendant l'intervalle de temps td au cours duquel la tension de la cathode CATH de T71 décroit jusqu'à la valeur E, le thyristor reste polarisé en sens inverse et les circuits, en particulier la self L75A, sont dimensionnés de telle sorte que le temps td soit supérieur au temps tq nécessaire à l'extinction complète du thyristor T71.

A l'instant To le condensateur C91 est déchargé avec la tension E sur chacune de ses bornes. A l'inverse, le condensateur C92 soumis à la tension E entre le point milieu 76A et l'entrée 64 est chargé. Dès que T72 est conducteur et T71 éteint, le condensateur C91 se charge tandis que le condensateur C92 se décharge à travers le point 76A, les courants correspondants s'ajoutant pour alimenter notamment l'accroissement du courant traversant l'enroulement inférieur de la self L75A et le thyristor T72 selon une courbe représentée à la figure 6 (1 self). Cet accroissement de courant est dû à la tension aux bornes de cet enroulement inférieur.

Lorsque le condensateur C92 est déchargé la tension au point 76A tend à devenir négative et la diode D112A commence à conduire. Simultanément le courant I self passe par un maximum Ix et commence à décroître.

Ce courant Ix correspond à la manifestation d'une énergie, $\frac{1}{2}L\ Ix^2$, emmagasinée dans la self L75A au moment $T_1$ de l'annulation de sa tension aux bornes pendant la phase de commutation (intervalle $t_c$ entre les instants To et $T_l$).

Il est nécessaire d'éliminer cette énergie piégée dans les meilleurs délais si l'on veut éviter un certain nombre d'inconvénients.

En effet, on peut constater notamment sur la courbe S de la figure 6 que le courant Ix vient s'ajouter au courant de charge $I_{ch}$ traversant le thyristor T72, ce qui risque d'augmenter dautant le courant total à couper lorsque l'on désire rapidement éteindre à nouveau ce thyristor.

Faute de précaution particulière, une puissance de commutation plus élevée est alors nécessaire, laquelle ne peut être fournie que par une self de commutation plus importante entraînant par là-même l'accroissement de la quantité d'énergie piégée par l'opération de commutation elle-même. On risque donc d'être amené à surdimensionner les thyristors par rapport aux besoins pour le seul courant utile.

En l'absence du circuit R116, C118, l'énergie piégée dans la self L75A mettrait un temps relativement considérable à se dissiper dans la boucle formée par la diode D112A, l'enroulement inférieur de L75A et le thyristor T72, seule la chute de tension, par exemple d'environ 3 volts, créée par la résistance propre du thyristor T72 intervenant alors de façon significative pour atténuer le courant Ix. Dans ces conditions une commutation rapide est difficile à obtenir et ne peut s'effectuer qu'au prix d'un échauffement dangereux des thyristors ou de leur surdimensionnement.

Diverses solutions mettant en œuvre des systèmes complexes et des composants d'un prix élevé ont été envisagées par le passé pour éliminer ce problème de sur-courant (phase de récupération) qui mettaient en œuvre des autotransformateurs ou des thyristors de soufflage supplémentaires, ou nécessitaient un surdimensionnement coûteux de certains composants.

Dans le mode de réalisation décrit, on a prévu d'éliminer l'énergie piégée dans l'inductance de commutation par dissipation thermique dans une résistance telle que R116. On a pu observer en effet qu'il était possible à relativement peu de frais d'utiliser une telle résistance R116 dimensionnée de façon suffisamment large pour obtenir une dissipation rapide sans que ce composant soit soumis à des contraintes trop importantes. C'est ainsi qu'avec une résistance R116 créant une chute de tension d'environ 60 volts dans la boucle au début de la phase de dissipation d'énergie piégée, on parvient à diviser par vingt (20) le temps de dissipation de cette énergie par rapport au cas où seule la résistance interne du thyristor T72 intervient à cet effet. Un tel résultat peut être obtenu avec une résistance par exemple de l'ordre d'une fraction d'ohm pour un thyristor calibré pour des tensions de 1000 volts environ et des courants de 100 ampères.

Tandis que la température du boîtier d'un tel thyristor ne saurait sans danger dépasser 80 − 90° C, l'expérience a montré qu'il était tout à fait possible de fonctionner avec des résistances R116 portées à des températures de plus de 400° C dont le refroidissement est assuré par la seule convection naturelle autour du composant sans recourir à des dispositifs complexes de radiateurs comme en sont équipés les thyristors de puissance utilisés dans la technique considérée.

La figure 6 illustre en S la variation du courant dans le thyristor T72 en l'absence de la résistance R116 tandis que la courbe R représente ce même courant en présence de cette résistance et le temps de récupération TR correspondant.

Il faut noter que le problème de dissipation d'une énergie piégée à l'occasion du soufflage d'un thyristor est un problème général qui est résolu de diverses manières dans l'art antérieur dont certaines font intervenir de façon plus ou moins inévitable au cours de la phase de récupération la dissipation par voie thermique d'une partie de cette énergie piégée. Cependant, dans ces systèmes le principe essentiel mis en œuvre au cours de la phase de récupération est la restitution de l'énergie piégée à l'alimentation par une boucle qui contient le circuit d'alimentation. A cet effet on utilise des composants supplémentaires qui peuvent être des thyristors auxiliaires de soufflage et des diodes ou des transformateurs également associés à des diodes. Le système illustré ici permet de faire l'économie de tels éléments supplémentaires en utilisant une boucle autonome par rapport à l'alimentation pour éliminer l'énergie piégée. La résistance R116 effectue la dissipation de la quasi-totalité de cette énergie à la fois rapidement et en limitant le courant dans la boucle de dissipation, lequel s'ajoute au courant de charge traversant le thyristor en conduction dans le demi-pont concerné. Or on sait que le dimensionnemant d'un thyristor n'est pas seulement fonction de l'amplitude du courant (I) qu'il peut être amené à faire passer, mais du temps (t) pendant lequel il doit le faire (paramètre $I^2t$).

La comparaison des courbes R et S de la figure 6 montre clairement le rôle bénéfique de la résistance R116 dans le sens non seulement d'une plus grande rapidité de récupération, mais également d'un dimensionnement économique des thyristors.

Il est ainsi possible d'obtenir, grâce au système décrit, des fréquences et une souplesse de commutation des thyristors très grandes grâce à la rapidité de la phase de récupération suivant la phase d'extinction. Cette rapidité de commutation est très avantageuse pour des systèmes du type décrit dans lesquels le réglage de la tension de sortie est assuré par variation des instants de commutation des thyristors et en fonction de la largeur des créneaux positifs et négatifs de la tension de sortie que l'on désire créer. Cette rapidité et cette souplesse de commutation sont obtenues sans faire intervenir de dispositifs coûteux et complexes compte tenu de l'importance des courants concernés. La perte d'énergie sous forme calorifique résultant de la solution utilisée est négligeable dans le contexte où ces dispositifs fonctionnent.

Lorsque la diode D112A devient conductrice le courant dans cette diode se soustrait du courant imposé par la self, ce qui diminue rapidement le courant fourni par les capacités. Au moment où celui-ci s'annule la tension du point 76A passe par un minimum −e qui correspond sensiblement à la chute de tension Ix x R116 créée par le courant de self dans la résistance R116.

Par l'effet de la mutuelle entre les deux enroulements de la self L75A, la tension sur la cathode T71 s'établit à −2e. Le thyristor est donc soumis à une tension directe E+2e.

Si l'on considère par exemple une tension de self inductance −e de 60 volts, on voit qu'une surtension de 120 volts tend à s'ajouter à la tension d'alimentation E (environ 500 volts) aux bornes du thyristor T71. Il est intéressant de diminuer cette surtension afin d'utiliser des composants de dimensions aussi limitées que possible. Ceci est obtenu par le branchement du condensateur C118 en parallèle à la résistance R116. Ce condensateur permet d'atténuer légèrement la pointe de surtension apparaissant aux bornes de ce circuit RC.

La figure 6 représente en P, la tension aux bornes de ce circuit lorsque la résistance R116 est présente seule et, en Q, la même grandeur en présence du condensateur C118. L'énergie dissipée dans les deux cas correspond à l'aire délimitée par ladite courbe de tension P ou Q et l'axe des temps, et ces deux surfaces sont égales mais l'on constate que la pointe de tension obtenue avec la courbe Q est sensiblement inférieure à celle de la courbe P.

Revenant maintenant à la figure 1, on constate que le point de jonction 114 entre le circuit R116, C118 et la diode D112$_A$ est également relié aux points milieu 76B et 76C par l'intermédiaire des diodes D112B et D112C qui jouent strictement le même rôle que la diode D112$_A$ lors de la commutation en conduction des thyristors T72, des ponts 70B et 70C. Chacun des ponts 70A, 70B et 70C est destiné à alimenter une phase respective d'un réseau triphasé et les signaux produits sur les sorties respectives 14A, 14B et 14C sont en conséquence déphasés de 120°, les uns par rapport aux autres sous l'action des circuits de commande respectifs des thyristors de ces différents ponts.

Les commutations des demi-ponts respectifs sont décalés dans le temps d'un tiers de période et les dissipations correspondantes des énergies piégées dans les selfs L75$_B$ et L75$_C$ dans le circuit R116, C118 par l'intermédiaire des diodes respectives D112B, D112C interviennent à des instants décalés dans le temps.

L'expérience a montré qu'il était possible d'utiliser le même circuit R116, C118 pour les trois phases sans autre accessoire de refroidissement que la ventilation naturelle de la résistance. Un circuit tel que celui qui vient d'être décrit peut permettre par exemple d'obtenir la récupération des thyristors de chaque demi-pont en 0,4 millisecondes, ce qui, pour une émission de télécommande centralisée à une fréquence typique de 175 HZ correspond à $1/4$ de période.

On remarque que le circuit de dissipation 100 (R106, C108) est associé au thyristor T71 de chacun des ponts 70A, B et C, les commutations des thyristors T71 et T72 intervenant, on le rappelle, toujours en opposition de phase puisque selon la technique d'extinction par mutuelle c'est l'allumage d'un thyristor d'une branche du demi-pont qui provoque l'extinction de l'autre.

Les circuits de dissipation 120 et 130 sont associés respectivement aux thyristors T73 et T74 de chacun des ponts 70A, B et C.

Il est intéressant de noter à cet égard que le dimensionnement de ces circuits de dissipation peut être avantageusement différent de celui des circuits 100 et 110 qui viennent d'être examinés. En effet, si l'on se reporte au diagramme du courant de sortie Is de la figure 5, on constate que, par l'effet de la self L84A du circuit de sortie 14A, ce courant est déphasé d'un

angle $\Phi$ par rapport à la tension S appliquée entre les points milieu 76A et 79A. On remarque notamment que la commutation en conduction du thyristor T71 intervient toujours pour le décalage considéré à un moment où la valeur instantanée $I_{AV}$ du courant de sortie est relativement faible alors qu'elle intervient au contraire lors de la mise en conduction du thyristor T74 à un moment où ce courant est voisin de sa valeur maximale (voir $I_{AR}$ fig. 5).

Si l'on garde à l'esprit le schéma de la figure 6, il en résulte donc que le courant total à couper sera plus faible dans le premier cas que dans le second et cette remarque est mise à profit pour dimensionner en conséquence les circuits d'extinction associés aux thyristors T71 et T74 respectivement, et notamment les résistances de dissipation correspondantes. Ainsi, avec l'onduleur qui est représenté, le dimensionnement de la résistance R106 pourra être notablement plus faible que celui de la résistance R136.

De la même manière, le dimensionnement de la résistance R116 sera plus faible que celui de la résistance R126 étant donné que le déphasage du courant reste sensiblement constant par rapport à la tension de sortie en raison de la présence des selfs L84. La remarque précédente reste valable dans la plage des déphasages normalement utilisés pour le fonctionnement du générateur ce qui permet de bénéficier de la remarque précédente dans le dimensionnement des composants résistifs.

Un onduleur construit conformément aux principes qui viennent d'être exposés permet donc d'obtenir avec l'aide d'un assemblage optimum de composants d'un coût raisonnable, une séquence de commutation très rapprochée des thyristors qui le composent.

En particulier, il est possible d'utiliser des thyristors essentiellement dimensionnés pour le seul courant utile, c'est à dire, participant au signal de sortie sans faire intervenir des courants très élevés pour leur commutation proprement dite. Ainsi, on a pu vérifier qu'à l'aide des dispositions qui viennent d'être décrites, le courant traversant un thyristor pour provoquer l'extinction du thyristor associé dans le demi-pont est de même ordre de grandeur que le courant utile traversant ce thyristor sans qu'il soit besoin de faire appel à un surdimensionnement important.

Outre ces résultats avantageux sur le plan du dimensionnement et donc du coût des thyristors, le circuit permet une commutation très rapide des thyristors tant pour la production d'ondulations de sortie à fréquence élevée que pour produire des commutations rapides dans les cas d'urgence, et réagir rapidement sur le niveau de la tension et/ou du courant de sortie en fonction de conditions prédéterminées.

Il va sans dire que d'autres modes de réalisation que celui qui vient d'être décrit sont possibles, pour mettre en œuvre les principes de l'invention tels qu'ils sont revendiqués ci-après.

## Revendications

1. Onduleur pour produire un signal de sortie périodique sous la commande d'un signal pilote, en vue de l'injection d'un signal de sortie sur une ligne d'énergie électrique polyphasée à N phases, comprenant:

— une alimentation électrique (10) délivrant un courant continu entre une première (34) et une seconde (28) borne d'alimentation,
— un circuit d'ondulation (12) comportant 2 N demi-ponts (moitiés de 70A, 70B, 70C) montés en parallèle entre les première et seconde bornes d'alimentation, chaque demi-pont comportant deux branches montées en série entre ces bornes d'alimentation, chaque branche comprenant un composant à conduction commandée, tel qu'un thyristor ($T_{71}$, $T_{72}$), polarisé de la première (34) vers la seconde (28) borne d'alimentation et une moitié d'inductance insérée entre les deux thyristors d'un demi-pont et pourvue d'une borne en son point milieu (76A); au moins un élément capacitif ($C_{91}$, $C_{92}$) étant monté en parallèle sur chaque branche et une résistance de dissipation d'énergie ($R_{106}$, $R_{116}$) étant montée en série, entre ledit point milieu (76A) et l'une desdites bornes d'alimentation, avec un composant à conduction polarisée tel qu'une diode ($D_{102A}$, $D_{112A}$), polarisé de la seconde vers la première borne, et
— N circuits de sortie (14A, 14B, 14C) pour injecter ledit signal de sortie, chaque circuit de sortie étant connecté entre les points milieux (76A, 79A) de deux inductances ($L_{75A}$, $L_{78A}$) appartenant respectivement à un premier et à un second demi-pont, les thyristors ($T_{71}$, $T_{72}$) appartenant au même demi-pont étant commandés en opposition de phase, caractérisé en ce que l'un au moins desdits éléments résistifs ($R_{106}$, $R_{116}$) de dissipation d'énergie est commun à au moins deux branches raccordées à une même borne d'alimentation (34, 28) mais appartenant à des demi-ponts raccordés à des circuits de sortie différents.

2. Onduleur suivant la revendication 1, caractérisé en ce qu'une capacité ($C_{108}$) est montée en parallèle sur au moins un élément résistif ($R_{106}$).

3. Onduleur suivant la revendication 1 ou 2, caractérisé en ce que les composants à conduction commandée ($T_{71}$, $T_{73}$), qui appartiennent à deux branches respectives des premier et second demi-ponts raccordés à des bornes d'alimentation différentes, sont commandés avec un décalage de phase.

## Patentansprüche

1. Wellenformer zur Erzeugung eines periodischen Ausgangssignals unter Steuerung durch ein Pilotsignal, zum Einspeisen eines Ausgangssignals in eine elektrische, N-phasige Stromversorgungsleitung, mit:

—  einer elektrischen Stromversorgung (10), die einen Gleichstrom zwischen einem ersten (34) und einem zweiten (28) Versorgungsanschluß angibt,

—  einer Wellenformschaltung (12), die 2 N Halbbrücken (Hälften von 70A, 70B, 70C) umfaßt, welche zwischen den ersten und den zweiten Versorgungsanschluß parallel geschaltet sind, wobei jede Halbbrücke zwei in Reihe zwischen diese Versorgungsanschlüsse geschaltete Zweige umfaßt und jeder Zweig ein Bauelement mit gesteuerter Leitung wie einen Thyristor ($T_{71}$, $T_{72}$), der in Richtung von dem ersten (34) zu dem zweiten (28) Versorgungsanschluß polarisiert ist, und eine Hälfte einer Induktivität enthält, die zwischen die beiden Thyristoren einer Halbbrücke eingefügt und an ihrem Mittelpunkt (76A) mit einem Anschluß versehen ist; wobei wenigstens ein kapazitives Element ($C_{91}$, $C_{92}$) zu jedem Zweig parallel geschaltet ist und ein Energieableitungswiderstand ($R_{106}$, $R_{116}$) zwischen dem Mittelpunkt (76A) und einem der Versorgungsanschlüsse in Reihe geschaltet ist mit einem eine polarisierte Leitung aufweisenden Bauteil wie eine Diode ($D_{102A}$, $D_{112A}$), die in Richtung von dem zweiten zu dem ersten Anschluß hin polarisiert ist, und

—  N Ausgangsschaltungen (14A, 14B, 14C) zum Einspeisen des Ausgangssignals, wobei jede Ausgangsschaltung zwischen die Mittelpunkte (76A, 79A) von zwei Induktivitäten ($L_{75A}$, $L_{78A}$) geschaltet ist, von denen die erste zu einer ersten und die zweite zu einer zweiten Halbbrücke gehört, wobei die Thyristoren ($T_{71}$, $T_{72}$), die zu derselben Halbbrücke gehören, mit entgegengesetzter Phasenlage gesteuert werden, dadurch gekennzeichnet, daß wenigstens eines der resistiven Elemente ($R_{106}$, $R_{116}$) zur Energieabführung wenigstens zwei Zweigen gemeinsam ist, die an denselben Versorgungsanschluß (34, 28) angeschlossen sind, jedoch zu Halbbrücken gehören, welche an verschiedene Ausgangsschaltungen angeschlossen sind.

2. Wellenformer nach Anspruch 1, dadurch gekennzeichnet, daß eine Kapazität ($C_{108}$) parallel zu wenigstens einem resistiven Element ($R_{106}$) geschaltet ist.

3. Wellenformer nach Anspruch 1 oder 2, dadurch gekennzeichnet, daß die Bauelemente mit gesteuerter Leitung ($T_{71}$, $T_{73}$), welche jeweils zu zwei entsprechenden Zeigen der ersten bzw. zweiten Halbbrücke gehören, die mit verschiedenen Versorgungsanschlüssen verbunden sind, mit Phasenverschiebung gesteuert werden.

**Claims**

1. A modulator for generating a periodic output signal under the control of a control signal with a view to the injection of this output signal into an electric polyphase power line, having N phases, comprising:

—  a power supply (10) for supplying a direct current between a first (34) and a second (28) supply terminal;

—  a modulation circuit (12) including: 2 N half-bridges (70A, 70B, 70C in part) mounted in parallel between the first and second supply terminals, each half-bridge including two loops mounted in series between these supply terminals, each loop including a component with controlled conduction, such as a thyristor ($T_{71}$, $T_{72}$) polarized from the first (34) supply terminal towards the second (28) and a half of an inductive element mounted between the two thyristors of a same half bridge and provided with a centrepoint terminal (76A); at least one capacitive element (C91, C92) mounted in parallel with each loop, and a resistive element ($R_{106}$, $R_{116}$) to ensure dissipation of energy, said resistive element being mounted between said centrepoint terminal (76A) and one of said supply terminals, in series with a selective polarized conductor, such as a diode (D102A, D112A) polarized from the first terminal towards the second, and,

—  N output circuits (14A, 14B, 14C) for injecting said output signal, each output circuit being connected between two centerpoint terminals (76A, 79A) of two inductive elements (L75A, L78A) respectively belonging to a first and a second half bridge, the thyristors ($T_{71}$, $T_{72}$) belonging to a same half bridge being controlled in phase opposition, characterized in that at least one of said resistive elements for the dissipation of energy ($R_{106}$, $R_{116}$) is common to at least two loops connected to the same supply terminal (34, 28) but belonging to half bridges connected to different output circuits.

2. A modulator as in claim 1, characterized in that a capacitor (C108) is mounted in parallel with at least one resistive element ($R_{106}$).

3. A modulator as in claim 1 or 2, characterized in that the components with controlled conduction ($T_{71}$, $T_{73}$) belonging to two respective loops of the first and second half-bridges, which are connected to different supply terminals, are controlled with a phase shift.

Fig.1

0 028 550

Fig. 2

Fig. 6

13

# Fig. 3

Fig. 3A    Fig. 3B    Fig. 3C    Fig. 3D

# Fig. 4

COMMANDE DE ALLUMAGE ⟶

0 028 550

Fig. 5

$T_{71}$ ALLUME, $T_{72}$ ETEINT
$T_{72}$  „  , $T_{71}$  „

$T_{74}$ ALLUME, $T_{73}$ ETEINT
$T_{73}$  „  , $T_{74}$  „